# NEW EUROPEAN PATENT SPECIFICATION

(11) **EP 0 064 067 B2**
(45) Date of publication and mention of the opposition decision: **27.03.2002**
(45) Mention of the grant of the patent: 03.08.1988
(21) Application number: 81902997.6
(22) Date of filing: 27.10.1981
(51) Int. Cl.: G02B 5/32, G03H 1/04

(54) **Method for generating a diffractive graphical composition**
Verfahren zur Erzeugung einer diffraktiven graphischen Zusammensetzung
Procedè de gèneration de composition graphique diffractive

(30) Priority: 05.11.1980 US 203563
(43) Date of publication of application: 10.11.1982
(73) Proprietor: McGREW, Stephen Paul, Santa Cruz California 95060 (US)
(72) Inventor: McGREW, Stephen Paul, Santa Cruz California 95060 (US)
(74) Representative: Grünecker, Kinkeldey, Stockmair & Schwanhäusser Anwaltssozietät
(86) International application number: US8101439
(87) International publication number: WO8201595

(56) References cited:
- EP-A- 0 043 509
- DE-A- 3 035 684
- US-A- 898 369
- US-A- 1 354 471
- US-A- 3 947 105
- US-A- 4 017 158
- US-A- 4 034 211
- US-A- 4 179 182
- US-A- 4 244 633
- Optical Halography, 1971,pp.194-197 S.A. Benton et al.:"Applied Optics, Vol. 9, No12,, Dec.1970, pp.2812-2813.

## Description

The invention relates to a method for generating a diffractive graphical composition.

Holography has been used widely for the generation of diffractive gratings (US―A―3,578,845) and three-dimensional images of objects and scenes (US―A―3,506,327; US―A―3,580,655; US―A―3,758,186). To make a diffraction grating, the interference pattern formed by the interference between two or more mutually coherent optical wavefronts (usually one spherical or planar wavefront and another spherical, cylindrical, or planar wavefront) is recorded on a high-resolution optical recording medium, such as a Lippman emulsion, photopolymer, photoresist, or dichromated gelatin. Such diffraction gratings are used in spectrophotometers, heads-up displays, and other optical instruments.

To make a three-dimensional image, the interference pattern formed by the interference between a spherical or planar wavefront and a complex wavefront formed by the reflection of coherent light from the surface of an object (or by transmission of coherent light through an object) is recorded on a high-resolution photographic medium. Alternatively, a three-dimensional image may be synthesized as described in US―A―4,206,965 by recording a large number of two-dimensional views of an object, in which case each individual recording step usually involves only the interference between a spherical or planar reference wavefront and a spherical. planar, or other wavefront carrying a two-dimensional image.

An improved form of holography to record three-dimensional images, described in US―A―3,633,989, reduces or eliminates all vertical parallax and thereby allows unblurred reconstruction with a white light source. As a consequence, the image appears in nearly pure spectral colours. Later exensions of the technique have included multiple images, each with different recording conditions to produce multi-coloured, three-dimensional images (9).

US―A―4,017,158 discloses a method for forming a transparency for reproducing preselected area delineations in colours and intensities thereof variable at will by using an interference pattern formed holographically by the interference of a split laser beam. A reference beam and an object beam are directed onto a recording medium at a fixed angle. Furthermore, the wavefront of the object beam incident on the recording medium is spacially coherent. Consequently, the diffraction pattern formed on the recording medium is a linear diffraction grating. The angle of the diffraction grating on each discreete area of the recording medium may be varied from area to area. If the linear diffraction grating is viewed directly with the linear diffraction grating positioned between a viewer and a light source and the light beam forming a predetermined angle with the plane of the linear diffraction grating, then the area covered by the diffraction grating would not appear to be of the same colour. Instead, a rainbow of colours would be visible. Furthermore, since the object wavefront incident on the recording medium is spacially coherent, the rainbow of colours would not be visible from a wide range of angles. For these reasons, the hologram produced in accordance with said known method cannot be viewed directly, and needs instead an elaborate arrangement illustrated in said patent specification.

Radially symmetric mechanically ruled diffraction gratings, especially spiral gratings, have been used to provide decorative colour effects. Segments of spiral gratings have been joined to form diffractive mosaic patterns. These gratings and grating mosaics have been generated as surface relief patterns and have been replicated by thermoplastic embossing. The embossed diffraction grating mosaics have been used as substrates for printed graphics.

In some instances, simple holographically generated diffraction gratings have been replicated by emoossing and used as decorative material. In such instances, the diffraction gratings have been limited to low-frequency, very simply, nonrandom patterns. From "Optical Engineering", 1980, page 666, ff., a one-step rainbow holographic process is known for the generation of color hologram images for archival storage of color films and for the generation of pseudocolor holographic imaging. Mr. Yu, the author of this article, uses one or more input transparencies, a Fourier transform lens combined with a complex spatial filter for encoding, a diffusor, one or more imaging lenses and a set of slits. In one specific embodiment described in Section IX of this article, the word "optics" is recorded so that different letters appear in different colors. Encoding was performed at the ground glass plate. The input transparency and the slit position were changed for each color component.

The task to be solved by the invention is to form graphical compositions having new visible effects.

The solution of this task is obtained by the method specified in the claim.

The present invention uses holographically generated diffractive patterns in the graphic arts (much as paint or coloured inks have previously been used) to form artistic compositions and decorative patterns of predetermined colour, apparent texture and apparent motion. These compositions and patterns are not the three-dimensional images which are a goal of holography; they are confined to the surface they are made upon. No three-dimensionality beyond perhaps a slight depth of texture or a possible kinetic illusion of depth is to be expected.

The invention provides the advantage of a method for generating new and useful colour, texture and kinetic effects in graphical compositions. The invention further provides a system for producing colours without the use of pigments. Additionally, the invention provides also means for easily composing graphical patterns incorporating diffractive effects, utilizing relatively simple and inexpensive equipment without the need for the complex and expensive equipment normally associated with holography. A further advantage of the invention is to teach a method of producing graphical compositions which are difficult to counterfeit for use in validating documents, labels, stamps, currencies, identification cards and other items whose value depends on their genuiness.

The diffractive patterns are used in any of several ways. First, a graphical composition may be made directly on the holographic medium by placing a first mask upon the holographic medium to limit a first exposure to certain areas, changing the mask and altering the setup to record a second diffractive pattern on a second set of predetermined areas, and continuing in this fashion until the desired composition is formed. The composition may then be replicated by contact printing, embossing, injection molding, or other suitable means.

Secondly, the diffractive patterns may be used to compose graphical designs by using the patterns themselves as contact printing masks. In this case, a further holographic recording medium is exposed through selected contact-printable diffractive patterns placed in contact, and exposure is limited to predetermined areas by a selected mask. Further exposures through further diffractive patterns and further masks are used to compose the desired graphical design.

Embodiments for carrying out the invention are described in detail below with reference to drawings, in which:
Fig. 1 is an isometric view showing a typical arrangement for making a conventional hologram to be used in making a textured diffractive pattern;
Figure 2 is an isometric view showing a typical arrangement for making a diffractive pattern which will provide a predetermined colour and textural effect;
Figure 3 is a schematic showing a typical viewing arrangement for a graphical pattern or a diffractive pattern incorporating diffractive colours and textures; and
Figure 4 is an isometric view of a representative system for generating a diffractive graphical composition by projection contact printing.

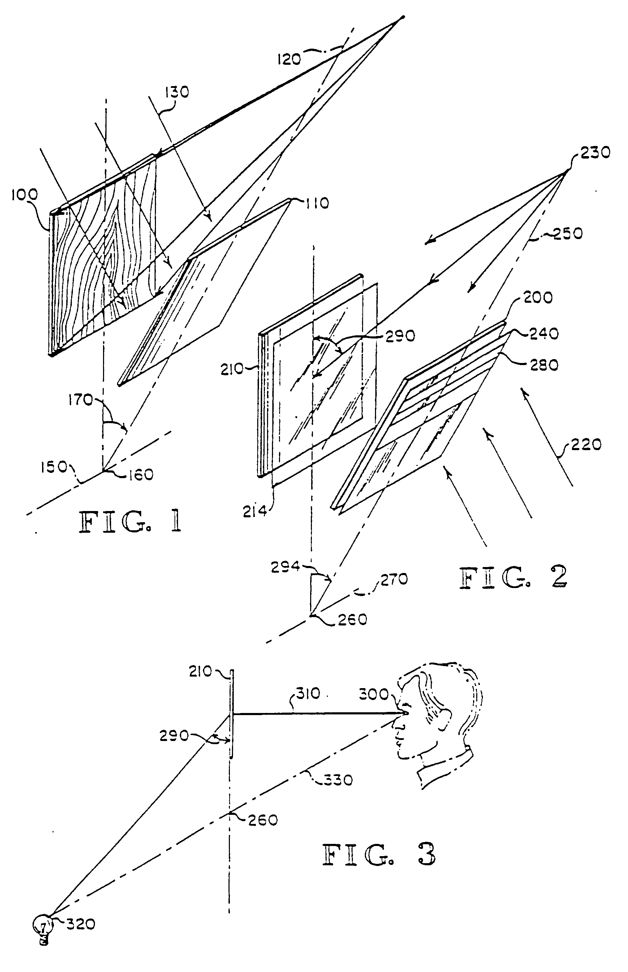

In figure 1 the production of conventional holograms of several different textured surfaces is shown. Textured surface 100 is illuminated by laser light. Scattered light from surface 100 is incident upon holograonic plate 110. Holographic plate 110 is illuminated by collimated laser light 130 derived from the same laser as light 120. Plate 110 is tilted with respect to surface 100 so that the extended planes of plate 110 and surface 100 intersect at line 150, whose center point is 160. The interference pattern formed by collimated light 130 and light scattered from surface 100 upon plate 110 is a conventional hologram of textured surface 100, with the exception that plate 110 is tilted at a preselected angle 170. The purpose of the tilt of plate 110 is explained in the following sections.

In the second step, a hologram such as recorded on plate 110 in Figure 1 may be used in the setup shown in Figure 2 to produce a diffractive pattern of any chosen color having the texture of the recorded surface (e.g., surface 100). In Figure 2, the surface recorded in hologram 200 (e.g., surface 100 in hologram 110) is imaged onto the surface of holograpnic plate 210 by reconstructing hologram 200 with collimated laser light beam 220.

Light from the same laser source as beam 220 is diverged from point 230 to illuminate plate 210, thereby forming an interference pattern upon plate 210 comprising a hologram of the surface recorded in hologram 200. Means such as mask 240 is employed to select the portions of hologram 200 contributing to the reconstruction of said surface. Point 230 is located on line 250, which is the line which passes through point 260 and the center of plate 200. Line 270 is the intersection of the extended planes of plate 200 and plate 210; point 260 is the midpoint of line 270.

The diffractive pattern on plate 210 is illuminated as indicated schematically in Figure 3. At a position 300, which is found by extending a line 330 from light source 320 through point 260 (see Figure 2) and finding the intersection of line 330 with line 310 extending normal to plate 210, the contribution of each horizontal strip 280 of hologram 200 defined by mask 240 will be a monochromatic image of the surface recorded in hologram 200. For best results, point 260 (Figures 2 and 3) corresponds to point 160 (Figure 1). The particular color of the monochromatic image contribution depends on the color of laser light used in forming the diffractive pattern on plate 210 and the angular separation of point 230 and strip 280 as seen from the midpoint of plate 210. What is actually observed at point 300 is the superposition of substantially identical images of a textured surface, each image being in a different color. The result is a diffractive pattern having the texture of a surface and a color distribution determined by mask 240 of Figure 2.

A complex mask 240 can produce a complex pattern of color distributions that change with different viewpoints. Plate 110 is tilted relative to surface 100 in Figure 1 so that, according to Figure 3, light source 320 can be located relatively close to plate 210. The diffractive pattern on plate 210, resulting from reconstructing only a thin horizontal strip of hologram 200, will generate a monochromatic field at position 300. Each horizontal strip of hologram 200 will produce a different color monochromatic field at position 300 only if point 230, point 260, and the entire plate bearing hologram 200 all lie on a straight line. If the plate bearing hologram 200 is parallel to surface 100 (and thus to plate 210), then point 260 is removed to infinity and consequently point 300 and light source 320 are also removed to infinity if each horizontal strip of hologram 200 is to contribute a monochromatic field.

When it is desired that the diffractive pattern is to be illuminated by a distant source (effectively at infinity), such as the sun, and that the pattern is to be viewed from a large distance, such as across a street, the plate bearing hologram 200 should be parallel to plate 210, and point 230 should be in the extended plane of hologram 200. Consequently, plate 110 should be parallel to surface 100.

If the above arrangements are not employed, a vertically bearing color distribution will result. If a vertically varying color distribution (such as a full rainbow spectrum) is desired, the relationship between points 260, 160, 320, and 300, as indicated in Figures 1, 2, and 3, may be altered.

While it is preferable to generate diffractive patterns with predetermined color distribution by using a simple reference beam and a complex object beam, it is also practical to use a complex reference beam. The essential characteristic of the optical system is that the resulting interfence pattern itself should closely resemble a pattern made by the above-described methods. Such an interference pattern is characterized by the diffractive effects it produces: it diffuses light more or less uniformly in the horizontal direction, and it diffuses light in the vertical direction according to an angular distribution which results in a predetermined mix of colors. The light wavefronts whose interference produces such a pattern are characterized by a substantial degree of spatial incoherence in the horizontal direction and a selected distribution of spatial incoherence in the vertical direction. "Spatial incoherence" as used here means a complex spatial phase dependence of high spatial frequency with negligible time dependence.

To form a graphical composition of several textures and colors directly on plate 210, exposures are made on plate 210 using different holograms 200 and masks 240 for each exposure. Separate masks 214 may be used to limit each exposure to a different predetermined region on plate 210 and thereby compose a graphical image or pattern.

The term "graphical composition" as used herein means an arrangement of colored or textured areas on a surface wherein the arrangement itself forms a desired picture, image, or pattern. The color and texture effects described herein are used in much the same way that paints might be used to form such a graphical composition.

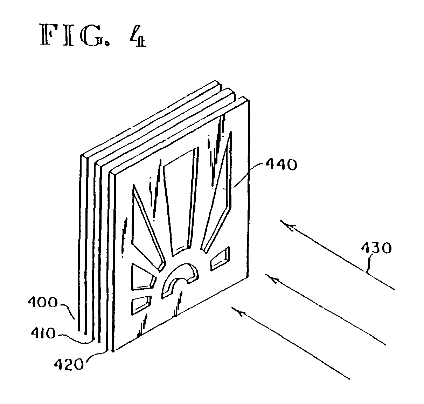

Diffractive patterns formed as in Figure 2 are preferably used in a third step, as illustrated in Figure 4. A mask 420 allows light 430 to pass through diffractive pattern 410 in preselected regions 440 to expose holographic plate 400, thereby contact printing a replica of diffraction pattern 410 onto plate 400 in regions 440. Further exposures may be made onto plate 400 using different patterns 410 and masks 420 to compose a desired graphical pattern. If pattern 410 is in sufficiently close contact with plate 400, the exposure may be made with light from an incandescent or arc light source. However, using a laser light source will avoid numerous problems that can arise, such as might be caused by the presence of dust particles between plates 400 and 410.

The diffractive effects described above are not exclusively applicable to flat shapes. The essential aspects of the invention are equally applicable to other shapes, such as spheres, toruses, cylinders, cones, and so on. For a textural effect to work well on such shapes, the shape of the real image bearing the desired textural effect should be approximately the same shape as the surface of the photosensitive medium onto which it is imaged. That is, the real image should be conformal to the shape of the photo-sensitive medium. Furthermore, the terms "vertical" and "horizontal" which are used herein refer to a relationship between the optical system and the diffractive pattern being formed, with "vertical" being the direction orthogonal to "horizontal", and "horizontal" being a direction in the pattern substantially parallel to the line joining an observer's two eyes in the arrangement used to display and view the final graphical composition.

The reference beam used to make the above-described holographic diffractive patterns may be incident upon either side of the photosensitive recording medium. That is, the holographic pattern may be of the front-beam or the back-beam type. However, it is preferable for the pattern to be of the front-beam type for most applications, such as applications wherein the pattern will be replicated as a surface relief pattern.

A specific example of making diffractive patterns in a graphical composition incorporating diffractive color and texture effects is as follows.

Employing the setup of Figure 1, a wooden plank is used to provide surface 100 with a wood-grained texture. Plate 110 is a glass plate coated with dichromated gelatin. Exposure is made with 200 millijoules per square centimeter at a beam ratio R:0 of 20:1 using the 4579-nm line of an argon-ion laser. Line 150 is removed to infinity so that plate 110 is parallel to surface 100. Plate 110 is placed 61 cm away from surface 100. After exposure, plate 110 is developed in water and isopropanol to yield a dichromated gelatin hologram.

Then, developed plate 110 is used as hologram in Figure 2. Employing the setup of Figure 2, a glass plate 210 is coated with a suitable photoresist and is exposed using a reference source 230 placed so as to form an angle 290 of 35 degrees. Plate 200 is placed 61 cm away from and parallel to plate 210, and is reconstructed with 4579 argon-ion laser light. A mask 240 with a single horizontal transparent strip 280 is placed over hologram 200. Strip 280 is located in a direction directly normal to the center of plate 210. Another mask 214, comprising a positive transparency of a photograph of a human face, is placed on plate 210. An exposure of 100 millijoules per square centimeter and a beam ratio R:0 of 1:1 is used. THE resist-coated plate is developed for one minute in a suitably diluted developer to generate a surface relief interference pattern. The pattern is then vacuum-coated with aluminum to achieve a transmissivity of 2 percent, and finally covered with a glass plate which is attached with ultraviolet-cured optical cement. This graphical composition is viewed reflectively at a distance by illuminating it with a distant spotlight at an angle of 45 degrees. The composition appears as a flat yellow-green image of the human face bearing a wood-grained texture. The embodiment described so far do not form part of the invention.

Graphical compositions formed from diffractive patterns generated using a diffuser as mentioned in the claim have a wide range of utility and are relatively easier to produce than those formed using a hologram 200.

An example according to the invention is as follows:

A set of three transmissive diffractive patterns is made as in the setup of Figure 2 using a long, narrow horizontal strip of opal glass as a diffuser instead of a hologram for the plate. That plate is located 30.5 cm away from a holographic plate 210. A reference source (a microscope objective with a pinhole filter at its focus) is placed so that angle 290 is 38 degrees for the first pattern, 46 degrees for the second pattern, and 58 degrees for the third pattern. Exposure is determined by the plate manufacturer's recommendation, using a helium-neon laser. Each of the three plates is developed in a suited developer and bleached in iodine-methanol bleach. When the plates are illuminated by a flashlight bulb located at 40 degrees (angle 290 in Figure 3) at a distance of 43.2 cm, an observer 91.44 cm away sees the first plate as a uniform red field, the second plate as a uniform green field, and the third plate as a uniform blue field. These plates may now be used as contact-printable diffractive patterns.

In further embodiment, a series of diffractive patterns are first formed in a surface relief medium, such as photoresist or gum bichromate. A metal plate replica of each pattern is formed by electroless deposition of nickel onto the surface relief medium or a replica thereof, followed by electrodeposition of nickel according to techniques well known to those skilled in the art of electroforming. The nickel plates thus formed may be replicated by techniques also well known to those skilled in the art.

A diffractive graphical composition can be formed as an embossing plate using the nickel plate replicas as follows:

First, the replica plates are coated with a photoresist. Regions of the plates are exposed to light and developed to uncover the metal in predetermined patterns. The metal in the uncovered regions is deeply etched and the photoresist is removed from the covered regions. Plates are obtained wherein in the elevated (unetched) regions bear relief diffractive patterns. These plates may be used as embossing dies in sequence to produce a graphical composition in combining the patterns from the various plates.

Alternative ways to emboss diffractive graphical compositions are apparent, such as to form a composition on a single metal plate or to mechanically join parts from different plates to form a single plate. The term "embossing", as used herein, means impressing a relief pattern onto a surface by any means, such casting, molding, hot stamping, or calendaring.

In a further preferred embodiment, the invention is applied to security device or anticounterfeiting device. Graphical compositions formed from complex diffractive patterns are extraordinarily difficult to counterfeit. They are much more finely detailed from the finest engraving, yet they can easily be recognized by eye. For example, a concert ticket, stock certificate, or other such item whose value depends on its genuineness may have a particular diffractive graphical composition embossed therein or affixed thereto. To counterfeit the item would require counterfeiting the diffractive composition, which is not possible by the methods normally employed by printers, such as photocopying.

If the composition is to be viewed by either reflected or transmitted light, and if it is embossed, it may be covered by a transparent coating of a material having a different refractive index than the embossed material. If the composition is to be viewed by reflected light, and is embossed, it may be coated with a thin layer of aluminum or other material to enhance its reflectivity, then overcoated with a transparent material. It is important to "bury" the embossed surface beneath a transparent coating both to protect it from damage and to prevent direct mechanical copying of the embossed pattern. Paper itself is not usually a suitable material to be embossed, but paper coated with a thermoplastic, such as polyethylene, is suitable.

If a reflective, embossed, diffractive composition is employed as a security device, it is best protected by a transparent material which adheres strongly. One way to assure strong adhesion while employing a reflective interlayer, such as aluminum, is to remove or displace the interlayer at many points which are small compared to the details of the composition, and to directly fuse a covering layer to the embossed substrate at those points. A way to form a virtually uncounterfeitable, embossed, diffractive composition on a paper substrate is to apply a large number of small, noncontiguous dots of embossable material to the substrate. Alternatively, a layer of embossable material with multiple connectivity (such as having missing spots) may be applied. The composition is embossed onto the top surface of the embossable material and then aluminized. A transparent overcoat is applied which penetrates the fibers of the paper substrate. The resulting structure is very difficult to disassemble without destroying the diffractive pattern.

## Claims

1. A method for generating a diffractive graphical composition by recording interference patterns on at least one region of a photosensitive medium, forming said patterns as off-axis holograms by the interference between a reference wavefront and an object wavefront such that the object wavefront for said at least one region has a relatively wide range of directions of incidence at each point on said region in a first axis and a relatively narrow range of directions of incidence at each said point in said region in an axis orthogonal to the first axis, said object wavefront for said region being derived from a random diffuser which is not a hologram without a lens being interposed between said diffuser (200) and said photosensitive medium (210).

## Patentansprüche

1. Verfahren zum Erzeugen einer brechenden grafischen Anordnung durch Aufzeichnen von Interferenzbildern in wenigstens einem Bereich eines lichtempfindlichen Mediums, Ausformen der Bilder als außeraxiale Hologramme durch die Interferenz zwischen einer Bezugs-Wellenfront und einer Objekt-Wellenfront, so dass die Objekt-Wellenfront für den wenigstens einen Bereich ein relativ breites Spektrum an Auftreffrichtungen an jedem Punkt in dem Bereich auf einer ersten Achse und ein relativ schmales Spektrum an Auftreffrichtungen an jedem Punkt in dem Bereich auf einer Achse rechtwinklig zu der ersten Achse aufweist, wobei die Objekt-Wellenfront für den Bereich von einem Zufalls-Diffusor hergeleitet wird, bei dem es sich nicht um ein Hologramm handelt, ohne dass eine Linse zwischen dem Diffusor (220) und dem lichtempfindlichen Medium (210) angeordnet ist.

## Revendications

1. Procédé pour produire une composition graphique diffringente par l'enregistrement de figures d'interférences sur au moins une région d'un milieu photosensible, en formant lesdites figures sous la forme d'hologrammes désaxés par l'interférence entre un front d'onde de référence et un front d'onde objet, de manière que le front d'onde objet pour l'au moins une région ait une gamme relativement étendue de directions d'incidence à chaque point dans cette région selon un premier axe et une gamme relativement restreinte de directions d'incidence à chaque point dans cette région selon un axe orthogonal au premier axe, le font d'onde objet pour cette région étant obtenu à partir d'un diffuseur aléatoire qui n'est pas un hologramme, sans qu'une lentille soit interposée entre ce diffuseur (200) et le milieu photosensible (210).
